# FASCICULE DE BREVET EUROPEEN

(11) **EP 2 803 458 B1**
(45) Date de publication et mention de la délivrance du brevet: **26.04.2017**
(21) Numéro de dépôt: 14305684.4
(22) Date de dépôt: 12.05.2014
(51) Int. Cl.: B29B 11/16, B29C 70/32, B29C 70/38, B29C 70/54

(54) **Procédé de réalisation d'une préforme de fibres par enroulement et outillage pour mettre en oeuvre ledit procédé**
Herstellungsverfahren einer Vorform für Fasern durch Wicklung, und Werkzeug zur Umsetzung dieses Verfahrens
Method for producing a fibre preform by winding and tool for carrying out said method

(30) Priorité: 15.05.2013 FR 1354348
(43) Date de publication de la demande: 19.11.2014
(73) Titulaire: Airbus Operations SAS, 31060 Toulouse (FR)
(72) Inventeur: De Mattia, Denis, 44115 Basse Goulaine (FR)
(74) Mandataire: Fantin, Laurent

(56) Documents cités:
- EP-A1- 0 953 433

## Description

La présente invention se rapporte à un procédé de réalisation d'une préforme de fibres par enroulement ainsi qu'à un outillage pour mettre en oeuvre ledit procédé.

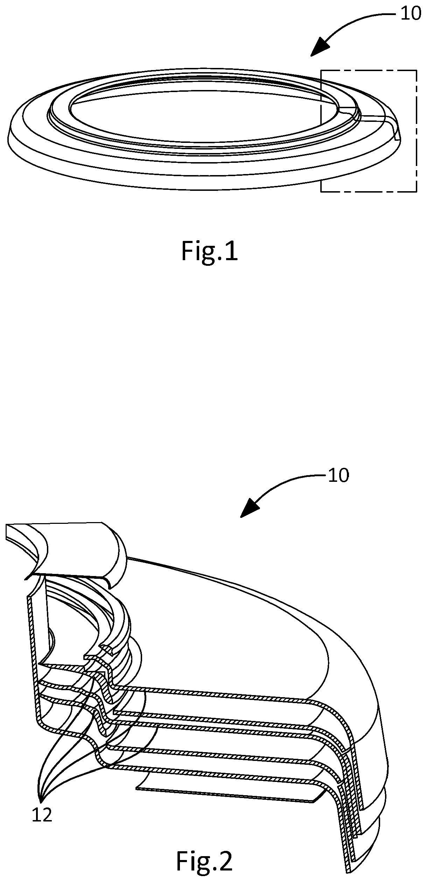

Sur les figures 1 et 2, on a représenté un cadre 10 d'un hublot d'un aéronef réalisé en matériau composite. Ce cadre 10 est obtenu à partir d'une préforme de fibres comprenant plusieurs sous-préformes de fibres.

Pour la suite de la description, on entend par préforme aussi bien une préforme qu'une sous-préforme susceptible d'être associée à d'autres sous-préformes pour former une préforme.

Certaines préformes 12 du cadre 10 ont un profil continu sur tout le pourtour du cadre, notamment pour limiter les déformations radiales tendant à augmenter le périmètre du cadre.

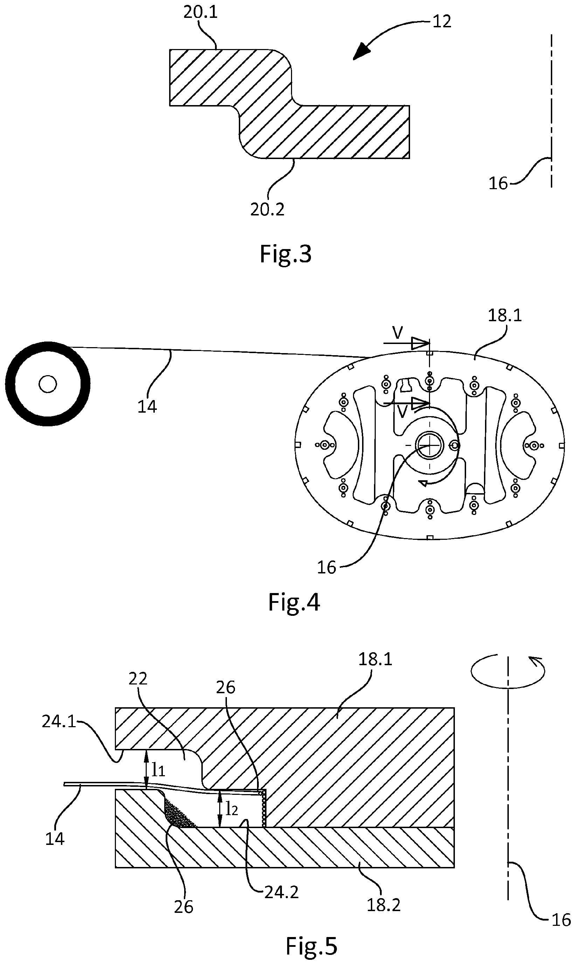

Selon un mode de réalisation illustré sur les figures 3 à 5, une préforme 12 est obtenue à partir d'au moins un fil 14, notamment en carbone, enroulé avec une certaine tension, autour d'un axe d'enroulement 16 entre deux flasques 18.1 et 18.2.

Selon cette technique de réalisation, la section de la préforme 12 dans un plan contenant l'axe d'enroulement 16 est sensiblement constante sur toute la périphérie de la préforme.

Par fil, on entend au moins un filament. Selon un mode de réalisation, un fil de carbone est un toron de plusieurs milliers de filaments de carbone de quelques microns (par exemple de l'ordre de 7 *µ*m).

Avantageusement, les filaments sont poudrés de résine.

Après la phase d'enroulement, la préforme 12 subit un cycle thermique afin de lui conférer une certaine cohésion grâce à la résine poudrée pour pouvoir être manipulée.

En suivant, les différentes préformes sont assemblées et subissent un cycle thermique visant à obtenir la polymérisation de l'ensemble afin d'obtenir un cadre.

Selon une contrainte importante, chaque préforme doit avoir une densité de fils homogène sur toute la section et sur toute la circonférence. De plus, chaque section de la préforme doit avoir un profil conforme à celui souhaité, notamment au niveau des angles.

Selon un mode de réalisation non représenté, la section de la préforme peut être rectangulaire et délimitée par deux faces planes et perpendiculaires à l'axe d'enroulement. Pour cette géométrie, on obtient une densité de fils homogène sur toute la section et sur toute la circonférence.

Selon d'autres variantes, la préforme 12 peut avoir des sections en L, en S ou autres.

Dans ce cas, la préforme 12 comprend deux faces opposées 20.1 et 20.2 non planes et espacées. En parallèle, les flasques 18.1 et 18.2 délimitent une gorge 22 avec deux faces 24.1 et 24.2 complémentaires aux faces 20.1 et 20.2 de la préforme.

Pour ces géométries, certaines zones 26 de la gorge 22 sont difficilement accessibles lors de l'enroulement du fil 14 compte tenu de sa tension. Ces zones 26 sont représentées en gris sur la figure 5.

En raison de la présence de ces zones 26 difficilement accessibles, la densité des fils n'est pas homogène sur toute la section ce qui conduit notamment à des défauts de forme et à une non-conformité de la pièce sur le plan géométrique et dimensionnel.

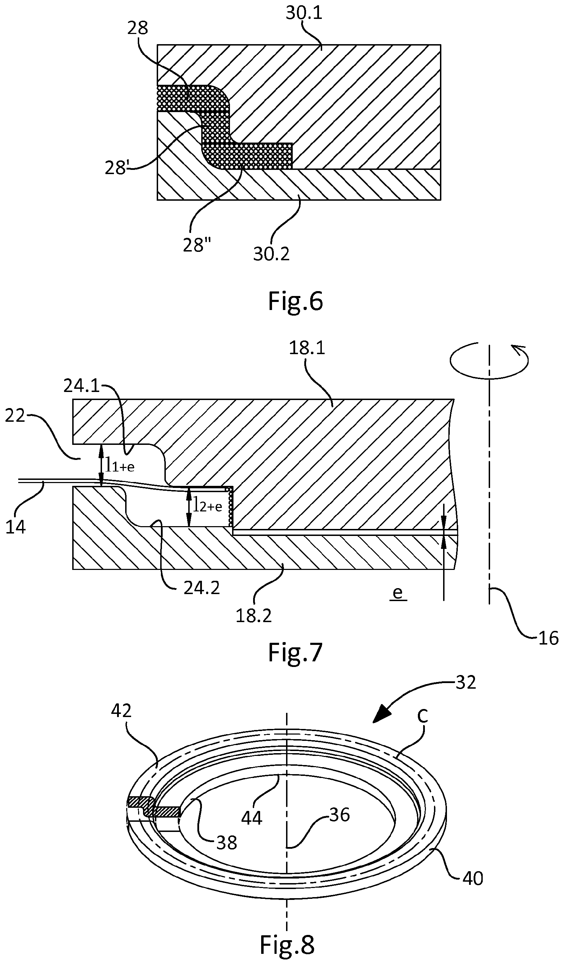

Pour remédier à ces inconvénients, un premier mode opératoire de l'art antérieur consiste à décomposer la préforme en sous-préformes 28, 28', 28" obtenues selon la technique d'enroulement précédemment décrite, chaque sous-préforme dite simple ayant une géométrie compatible avec un bon remplissage, à savoir avec des faces opposées 20.1 et 20.2 planes et perpendiculaires à l'axe d'enroulement 16. En suivant, les sous-préformes sont assemblées dans un outillage lors d'une opération d'estampage, comme illustré sur la figure 6. Cette opération d'estampage consiste à comprimer les sous-préformes 28, 28', 28" entre deux matrices 30.1 et 30.2 afin de faire glisser latéralement les couches de fils de manière à obtenir la préforme définitive.

Même s'il permet de remédier à certains défauts, ce mode opératoire n'est pas satisfaisant car il conduit à multiplier le nombre d'opérations d'enroulement ce qui tend à augmenter le coût de la pièce obtenue et le temps nécessaire pour son obtention.

Selon un autre mode opératoire de l'art antérieur illustré sur la figure 7, l'enroulement est réalisé entre deux flasques 18.1 et 18.2 avec un écartement entre les deux faces 24.1 et 24.2 supérieur à la valeur théorique. Ainsi, on prévoit un entrefer e supérieur à 0 entre les deux flasques 18.1 et 18.2. Après l'opération d'enroulement, les deux flasques sont rapprochés afin de supprimer l'entrefer e et obtenir un écartement entre les deux faces 24.1 et 24.2 conforme à la valeur théoriqu e. Ce rapprochement est sensé combler le manque de fils dans les zones 26. Toutefois, des essais montrent que les zones 26 ne sont pas suffisamment remplies et que les géométries dans ces zones 26 ne sont pas suffisamment précises (angle insuffisamment marqué).

Le document EP-953.433 décrit un dispositif pour déposer des fibres avec une tête équipée d'une roue de compactage rigide qui compacte la fibre juste déposée. Cette tête de dépose peut être utilisée pour placer des fibres par enroulement dans des rainures avec une section rectangulaire. Cependant, elle n'est pas adaptée pour des sections non rectangulaires.

Aussi, la présente invention vise à remédier aux inconvénients de l'art antérieur. A cet effet, l'invention propose un procédé de réalisation d'une préforme de fibres consistant à enrouler autour d'un axe d'enroulement au moins un fil dans une gorge d'un moule, caractérisé en ce qu'il consiste à utiliser un élément souple apte à se déformer par flexion, dans un plan contenant l'axe d'enroulement, de manière à pénétrer dans ladite gorge afin de pousser les sections du ou des fil(s) vers le fond de la gorge et/ou vers des zones non directement accessibles par le ou les fil(s).

Cette solution permet d'obtenir une densité de sections de fil homogène au niveau de chaque section de la préforme. Elle permet également d'assurer la conformité de la pièce sur le plan géométrique et dimensionnel.

Avantageusement, le procédé consiste à utiliser un élément souple sous forme d'un disque mince avec un axe disposé dans un plan contenant l'axe d'enroulement. Dans ce cas, de préférence, le disque mince pivote librement afin que la périphérie du disque mince roule sur le ou les fils.

Avantageusement, l'élément souple est solidaire d'un support mobile de sorte que l'extrémité libre de l'élément souple s'écarte de l'axe d'enroulement au cours du remplissage de la gorge.

L'invention propose également un outillage pour la mise en oeuvre du procédé de l'invention. Cet outillage se caractérise en ce qu'il comprend au moins un élément souple agencé de manière à pénétrer à l'intérieur de la gorge dans laquelle sont enroulés le ou les fils, ledit élément souple, apte à se déformer par flexion dans un plan contenant l'axe d'enroulement de manière à pénétrer dans ladite gorge, ledit élément souple comprenant une extrémité libre susceptible de venir en contact avec le ou les fil(s) afin de les pousser vers le fond de la gorge et/ou vers des zones non directement accessibles par le ou les fil(s).

Avantageusement, l'élément souple est un disque mince avec un axe disposé dans un plan contenant l'axe d'enroulement.

De préférence, l'axe du disque mince pivote librement afin que la périphérie du disque mince roule sur le ou les fils.

Avantageusement, l'élément souple est solidaire d'un support mobile. De préférence, des moyens de rappel sont prévus pour maintenir l'extrémité libre de l'élément souple en contact avec le ou les fil(s).

D'autres caractéristiques et avantages ressortiront de la description qui va suivre de l'invention, description donnée à titre d'exemple uniquement, en regard des dessins annexés sur lesquels :
- la figure 1 est une vue en perspective d'un cadre d'un hublot d'aéronef,
- la figure 2 est une vue en perspective en éclaté des différents constituants du cadre de la figure 1,
- la figure 3 est une section d'une préforme utilisée dans la réalisation d'un cadre,
- la figure 4 est une vue latérale illustrant un outillage pour réaliser la préforme de la figure 3 par enroulement d'un fil,
- la figure 5 est une coupe selon la ligne V-V de la figure 4,
- la figure 6 est une coupe partielle d'un outillage d'estampage pour réaliser une préforme selon un premier mode opératoire de l'art antérieur,
- la figure 7 est une coupe partielle d'un outillage pour réaliser une préforme selon un autre mode opératoire de l'art antérieur,
- la figure 8 est une vue en perspective d'une préforme réalisée à partir du procédé de l'invention,
- la figure 9 est une vue en perspective d'une partie d'un outillage permettant de réaliser une préforme qui illustre l'invention,
- la figure 10 est une vue latérale de l'outillage de la figure 9, et
- les figures 11A à 11C sont des coupes illustrant l'outillage de la figure 9 à différents stades du remplissage.

Sur la figure 8, on a représenté une préforme 32 obtenue par l'enroulement d'au moins un fil 34 autour d'un axe d'enroulement 36.

Dans des plans contenant l'axe d'enroulement 36, la préforme a des sections en S. Ainsi, chaque section comprend un côté interne qui forme le chant interne 38 de la préforme 32, un côté externe qui forme le chant externe 40 de la préforme, une ligne courbe supérieure en forme de marches d'escalier qui forme la face supérieure 42 de la préforme et une ligne courbe inférieure en forme de marches d'escalier qui forme la face inférieure 44 de la préforme.

La préforme 32 a un contour C circulaire centré sur l'axe d'enroulement 36. Ainsi, la préforme est dite de révolution.

Avantageusement, le fil 34 est poudré de résine. Selon un mode de réalisation, le fil 34 est en carbone.

Selon une application, la préforme 32 peut être associée à d'autres éléments comme d'autres préformes de manière à former un cadre d'un hublot d'aéronef. Cependant, l'invention n'est pas limitée à cette application.

De plus, la préforme peut avoir un contour non circulaire. Ainsi, le contour de la préforme peut comprendre au moins une portion courbe et au moins une portion rectiligne.

Enfin, l'invention n'est pas limitée à la forme de section en S. Ainsi, les faces supérieure et inférieure 42 et 44 peuvent avoir d'autres formes, non planes et/ou non perpendiculaires à l'axe d'enroulement 36.

Le matériau du fil, la nature de la résine peuvent varier, notamment en fonction des caractéristiques recherchées.

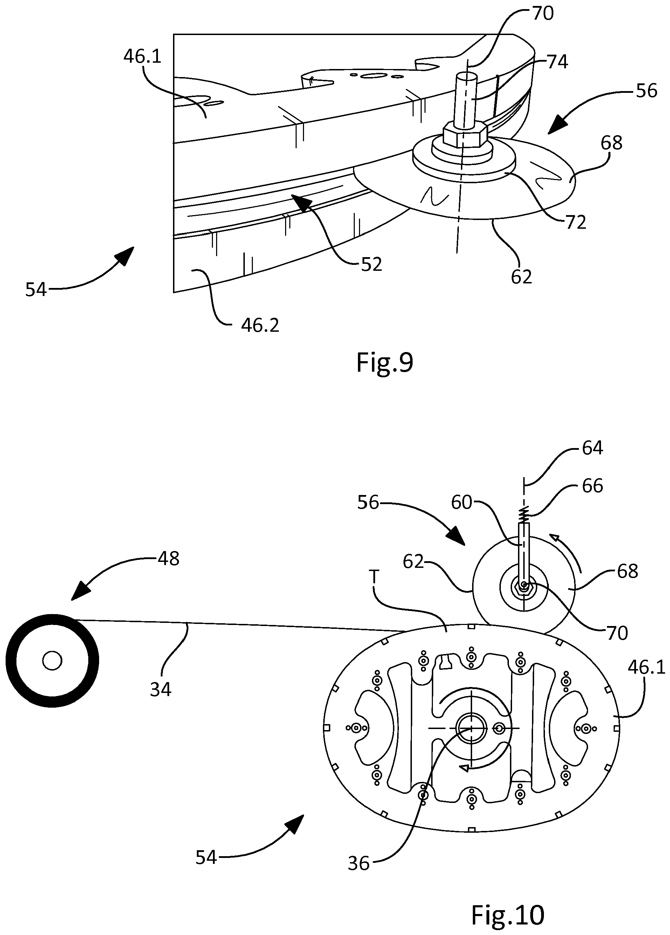

Sur les figures 9, 10, 11A à 11C, on a représenté un outillage pour réaliser une préforme 32.

Cet outillage comprend deux flasques 46.1 et 46.2 aptes à pivoter autour de l'axe d'enroulement 36 et des moyens 48 d'alimentation en fil.

Les deux flasques 46.1 et 46.2 comprennent respectivement des faces 50.1 et 50.2 complémentaires aux faces supérieure et inférieure 42 et 44 de la préforme à obtenir de manière à ce que lorsque les deux flasques 46.1 et 46.2 sont assemblés, ils définissent une gorge 52 dont la géométrie et les dimensions sont identiques à celles de la préforme 42.

De manière générale, l'outillage comprend un moule 54 apte à pivoter autour de l'axe d'enroulement 36, avec une gorge 52 périphérique dont le volume est identique à celui de la préforme à réaliser. Ainsi, la gorge 52 est délimitée par les deux faces 50.1 et 50.2 et éventuellement un fond qui correspond au chant interne 38 de la préforme.

Les moyens 48 d'alimentation en fil peuvent dévider au moins un fil 34. En variante, ils peuvent dévider plusieurs fils.

Avantageusement, les moyens 48 d'alimentation assurent une certaine tension du fil, par exemple de l'ordre de 3 à 5 daN.

Les moyens d'alimentation en fil, le moule et les moyens pour les mettre en rotation ne sont pas plus décrits car ils peuvent être identiques à ceux de l'art antérieur.

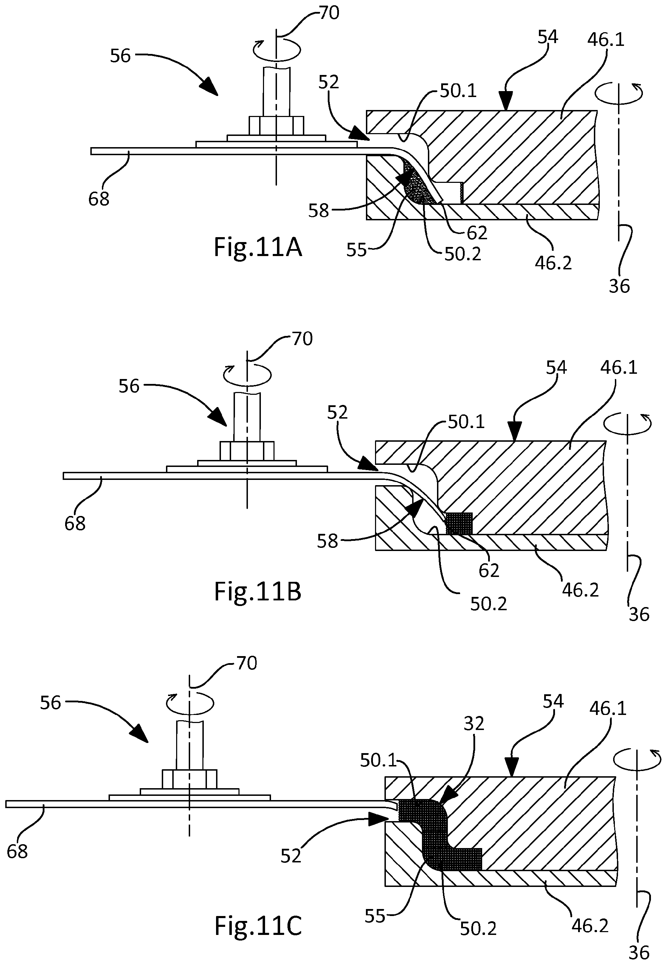

Comme illustré sur les figures 11A à 11C, le fil 34 s'enroule dans la gorge 52 de manière à former des couches qui se superposent les unes sur les autres en partant du chant interne 38 jusqu'au chant externe 40. Un remplissage optimal de la préforme consiste à distribuer pour chaque section de la préforme et pour chaque couche, les sections du fil sur tout l'espace entre les deux faces 50.1 et 50.2 de la gorge 52.

Compte tenu de la tension et des formes des faces 50.1 et 50.2, la gorge 52 comprend au moins une zone 55 (grisée) qui n'est pas directement accessible par le fil 34 lors de son enroulement.

Le fil 34 vient en contact avec les autres sections du fil déjà déposées en un point de tangence T.

Selon l'invention, l'outillage comprend un dispositif 56 pour pousser les sections du fil déposées dans la gorge vers l'axe d'enroulement et/ou vers la ou les zones 55 non directement accessibles par le fil.

Ce dispositif 56 comprend au moins un élément souple 58 de manière à pénétrer à l'intérieur de la gorge 52, l'élément souple étant solidaire d'un support 60 et comprenant une extrémité libre 62 susceptible de venir en contact avec la ou les dernières sections déposées du ou des fil(s).

Par souple, on entend que l'élément 58 est apte à se déformer par flexion, dans un plan contenant l'axe d'enroulement 36, de manière à pénétrer dans la gorge 52. Toutefois, lorsqu'il n'est pas déformé par flexion, l'élément 58 ne peut pas se comprimer selon une direction radiale (perpendiculaire à l'axe d'enroulement) si bien que la longueur entre le support 60 et l'extrémité libre 62 est constante.

De préférence, le point de tangence T est disposé entre les moyens 48 d'alimentation en fil et le dispositif 56. Ainsi, l'élément souple 58 tend à déplacer la section de fil juste après qu'elle soit en contact avec les autres sections de fil déjà déposées.

En variante, le dispositif 56 est disposé en amont du point de tangence T. Dans ce cas, l'élément souple 58 est en contact avec les sections déjà déposées du ou des fils et tend à orienter la section du ou des fils juste avant qu'elle ne soit en contact avec les autres sections déjà déposées.

Avantageusement, le support 60 est mobile. Comme illustré sur les figures 11A à 11C, lors du remplissage, le support 60 tend à se déplacer de manière à ce que l'extrémité libre 62 s'écarte de l'axe d'enroulement 36 au cours du remplissage de la gorge 52. De préférence, la pression exercée par l'extrémité libre 62 sur les sections déjà déposées du ou des fil(s) est sensiblement constante.

Selon un mode de réalisation, l'outillage comprend une glissière 64 s'étendant radialement le long de laquelle peut coulisser le support 60.

De préférence, le support 60 peut coulisser librement. Dans ce cas, l'outillage comprend des moyens de rappel 66, comme un ressort de compression par exemple, qui tendent à maintenir l'extrémité libre 62 en contact avec les sections déjà déposées du ou des fil(s).

Selon une caractéristique de l'invention, l'élément souple 58 est un disque mince 68 en matériau souple avec un axe 70 disposé dans un plan contenant l'axe d'enroulement 36. Cette configuration confère à l'élément souple 58 une grande raideur selon une direction tangente à l'enroulement du ou des fils.

Selon un mode de réalisation, le disque mince 68 a une épaisseur comprise entre approximativement 0,2 et 0,3 mm et un diamètre de l'ordre de 100 mm. Le disque mince 68 est en polychlorure de vinyle.

L'axe 70 du disque mince est parallèle à l'axe d'enroulement 36. Toutefois, l'axe 70 pourrait ne pas être parallèle et s'auto-orienter dans un plan contenant l'axe d'enroulement 36.

Selon une autre caractéristique de l'invention, le disque mince 68 peut pivoter librement selon son axe 70.

Selon un mode de réalisation, le disque mince 68 comprend un moyeu 72 qui se prolonge par une tige 74 perpendiculaire au disque mince 68 et qui forme l'axe 70 de rotation du disque. En variante, le moyeu 72 peut se prolonger de part et d'autre du disque par deux tiges perpendiculaires au disque mince 68 et qui forment l'axe 70 de rotation.

De préférence, la tige 74 pivote librement, par exemple dans un palier solidaire du support 60.

Comme illustré sur la figure 10, lorsque le moule est mis en rotation, cela provoque la mise en rotation du disque qui tourne sur lui-même en raison notamment des frottements générés par le contact entre les faces supérieure et/ou inférieure du disque mince 68 avec le moule 54. De ce fait, l'extrémité libre 62 qui correspond à la périphérie du disque roule sur les sections déjà déposées du ou des fil(s), ce qui tend à réduire fortement les frottements. Il n'est pas indispensable que la vitesse périphérique du disque soit égale à la vitesse de défilement du fil. Il peut y avoir un léger frottement à ce niveau en raison d'un écart de vitesse. Ainsi, le disque mince peut rouler avec ou sans frottement sur le ou les fils déjà enroulés.

La matière et l'épaisseur du disque mince 68 permettent à ce dernier de se déformer pour pénétrer dans la gorge 52. La partie du disque mince insérée dans la gorge, déplace et repousse le ou les fils, en évitant leur empilement naturel, les tasse légèrement si bien que le ou les fils comblent la gorge 52 sans laisser de zones 55 non remplies comme pour l'art antérieur.

Le procédé de l'invention consiste à utiliser un élément souple 58 qui pénètre dans la gorge et qui pousse les sections du ou des fils enroulés vers le fond de la gorge et/ou vers les zones non directement accessibles par le ou les fils.

Ainsi, le procédé de l'invention permet d'obtenir directement la préforme sans avoir besoin de réaliser des sous-préformes de forme simple qui sont ensuite assemblées.

Enfin, le procédé de l'invention permet d'obtenir une densité de sections de fils homogène pour chaque section.

En suivant, la préforme peut être au moins partiellement polymérisée de manière à pouvoir être manipulée. Elle est ensuite sortie du moule 54, par exemple en écartant les deux flasques 46.1 et 46.2. La préforme ainsi réalisée peut être associée à d'autres préformes de manière à former une pièce en matériau composite comme un cadre d'un hublot d'aéronef par exemple.

## Revendications

1. Procédé de réalisation d'une préforme de fibres consistant à enrouler autour d'un axe d'enroulement (36) au moins un fil (34) dans une gorge (52) d'un moule (54), **caractérisé en ce qu'**il consiste à utiliser un élément souple (58) apte à se déformer par flexion, dans un plan contenant l'axe d'enroulement (36), de manière à pénétrer dans ladite gorge (52) afin de pousser les sections du ou des fil(s) vers le fond de la gorge (52) et/ou vers des zones (55) non directement accessibles par le ou les fil(s).

2. Procédé selon la revendication 1, **caractérisé en ce qu'**il consiste à utiliser un élément souple (58) sous forme d'un disque mince (68) avec un axe (70) disposé dans un plan contenant l'axe d'enroulement (36).

3. Procédé selon la revendication 2, **caractérisé en ce que** le disque mince (68) pivote librement afin que la périphérie du disque mince (68) roule sur le ou les fils.

4. Procédé selon la revendication 1 ou 2, **caractérisé en ce que** l'élément (58) est solidaire d'un support (60) et comprend une extrémité libre (62) susceptible de venir en contact avec le ou les fil(s), ledit support étant mobile de sorte que l'extrémité libre (62) s'écarte de l'axe d'enroulement (36) au cours du remplissage de la gorge (52).

5. Procédé selon la revendication 4, **caractérisé en ce que** la pression exercée par l'extrémité libre (62) de l'élément souple sur les sections déjà déposées du ou des fil(s) est sensiblement constante.

6. Outillage pour la mise en oeuvre d'un procédé de réalisation d'une préforme de fibres selon l'une des revendications précédentes, ledit outillage comprenant des moyens (48) d'alimentation en fil, un moule (54) avec une gorge (52) dans lequel est susceptible d'être enroulé au moins un fil (34) autour d'un axe d'enroulement (36), ledit outillage étant **caractérisé en ce qu'**il comprend au moins un élément souple (58) apte à se déformer par flexion, dans un plan contenant l'axe d'enroulement (36), de manière à pénétrer dans ladite gorge (52), ledit élément souple (58) comprenant une extrémité libre (62) susceptible de venir en contact avec le ou les fil(s) afin de les pousser vers le fond de la gorge (52) et/ou vers des zones (55) non directement accessibles par le ou les fil(s).

7. Outillage selon la revendication 6, **caractérisé en ce que** l'élément souple (58) est un disque mince (68) avec un axe (70) disposé dans un plan contenant l'axe d'enroulement (36).

8. Outillage selon la revendication 7, **caractérisé en ce que** l'axe (70) du disque mince pivote librement afin que la périphérie du disque mince (68) roule avec ou sans frottement sur le ou les fils déjà enroulés.

9. Outillage selon l'une des revendications 7 à 8, **caractérisé en ce que** le disque mince (68) est en polychlorure de vinyle.

10. Outillage selon l'une des revendications 7 à 9, **caractérisé en ce que** le disque mince (68) a une épaisseur comprise entre approximativement 0,2 mm et 0,3mm.

11. Outillage selon l'une des revendications 6 à 10, **caractérisé en ce que** l'élément souple (58) est solidaire d'un support (60) mobile.

12. Outillage selon la revendication précédente, **caractérisé en ce qu'**il comprend une glissière (64) s'étendant radialement le long de laquelle peut coulisser le support (60).

13. Outillage selon la revendication précédente, **caractérisé en ce qu'**il comprend des moyens de rappel (66) qui tendent à maintenir l'extrémité libre (62) de l'élément souple en contact avec le ou les fil(s).

## Patentansprüche

1. Verfahren zur Herstellung einer Vorform aus Fasern, das darin besteht, einen Faden (34) in einer Vertiefung (52) einer Form (54) um eine Wickelachse (36) zu wickeln, **dadurch gekennzeichnet, dass** dieses darin besteht, ein weiches Element (58) zu verwenden, das dazu geeignet ist, sich in einer die Wickelachse (36) enthaltenen Ebene durch Biegen zu verformen, um auf diese Weise in die Vertiefung (52) einzudringen, um die Abschnitte des Fadens oder der Fäden zum Boden der Vertiefung (52) und/oder zu nicht unmittelbar für den Faden oder die Fäden zugänglichen Bereichen (55) zu schieben.

2. Verfahren nach Anspruch 1, **dadurch gekennzeichnet, dass** dieses darin besteht, ein weiches Element (58) in der Gestalt einer dünnen Scheibe (68) zu verwenden, die über eine Achse (70) verfügt, die in einer die Wickelachse (36) enthaltenen Ebene angeordnet ist.

3. Verfahren nach Anspruch 2, **dadurch gekennzeichnet, dass** die dünne Scheibe (68) frei dreht, so dass der Umfang der dünnen Scheibe (68) auf dem Faden oder den Fäden abrollt.

4. Verfahren nach Anspruch 1 oder 2, **dadurch gekennzeichnet, dass** das Element (58) an einer Halterung (60) angebracht ist und ein freies Ende (62) aufweist, das dazu geeignet ist, in Kontakt mit dem Faden oder den Fäden zu treten, wobei die Halterung derart beweglich ist, dass sich das freie Ende (62) während der Füllung der Vertiefung (52) von der Wickelachse (36) entfernt.

5. Verfahren nach Anspruch 4, **dadurch gekennzeichnet, dass** der vom freien Ende (62) des weichen Elements auf die bereits abgelegten Abschnitte des Fadens oder der Fäden ausgeübte Druck im Wesentlichen konstant ist.

6. Werkzeug für die Ausführung eines Verfahrens zur Herstellung einer Vorform aus Fasern nach einem der vorhergehenden Ansprüche, wobei das Werkzeug Mittel (48) zum Zuführen eines Fadens und eine Form (54) mit einer Vertiefung (52) aufweist, in die wenigstens ein Faden (34) um eine Wickelachse (36) einwickelbar ist, wobei das Werkzeug **dadurch gekennzeichnet ist, dass** dieses wenigstens ein weiches Element (58) aufweist, das in einer die Wickelachse (36) enthaltenen Ebene durch Biegung verformbar ist, um auf diese Weise in die Vertiefung (52) einzudringen, wobei das weiche Element (58) ein freies Ende (62) aufweist, das sich dazu eignet, in Kontakt mit dem Faden oder den Fäden zu treten, um diese zum Boden der Vertiefung (52) und/oder zu für den Faden oder die Fäden nicht unmittelbar zugänglichen Bereichen (55) zu schieben.

7. Werkzeug nach Anspruch 6, **dadurch gekennzeichnet, dass** das weiche Element (58) eine dünne Scheibe (68) ist, die über eine Achse (70) verfügt, die in einer die Wickelachse (36) enthaltenen Ebene angeordnet ist.

8. Werkzeug nach Anspruch 7, **dadurch gekennzeichnet, dass** sich die Achse (70) der dünnen Scheibe frei dreht, so dass der Umfang der dünnen Scheibe (68) mit oder ohne Reibung auf dem oder den bereits aufgewickelten Faden oder Fäden abrollt.

9. Werkzeug nach einem der Ansprüche 7 bis 8, **dadurch gekennzeichnet, dass** die dünne Scheibe (68) aus Polyvinylchlorid ist.

10. Werkzeug nach einem der Ansprüche 7 bis 9, **dadurch gekennzeichnet, dass** die dünne Scheibe (68) eine Dicke aufweist, die ungefähr zwischen 0,2 mm und 0,3 mm liegt.

11. Werkzeug nach einem der Ansprüche 6 bis 10, **dadurch gekennzeichnet, dass** das weiche Element (58) an einer beweglichen Halterung (60) angebracht ist.

12. Werkzeug nach dem vorhergehend Anspruch, **dadurch gekennzeichnet, dass** dieses eine Führung (64) aufweist, die sich in radiale Richtung erstreckt und entlang derer die Halterung (60) gleiten kann.

13. Werkzeug nach dem vorhergehenden Anspruch, **dadurch gekennzeichnet, dass** dieses Rückstellmittel (66) aufweist, die dazu neigen, das freie Ende (62) des weichen Elements in Kontakt mit dem Faden oder den Fäden zu halten.

## Claims

1. Method for producing a fibre preform involving winding at least one thread (34) about a winding axis (36) in a groove (52) of a mould (54), **characterised in that** it involves using a flexible element (58) which is capable of becoming deformed by means of flexion, in a plane which contains the winding axis (36), in order to penetrate into the groove (52) in order to push the sections of the thread(s) towards the base of the groove (52) and/or towards zones (55) which cannot be accessed directly by the thread(s).

2. Method according to Claim 1, **characterised in that** it involves using a flexible element (58) in the form of a thin disc (68) with an axis (70) which is arranged in a plane which contains the winding axis (36).

3. Method according to Claim 2, **characterised in that** the thin disc (68) pivots freely so that the periphery of the thin disc (68) rolls on the thread(s).

4. Method according to Claim 1 or Claim 2, **characterised in that** the element (58) is fixedly joined to a support (60) and comprises a free end (62) which is capable of coming into contact with the thread(s), the support being movable so that the free end (62) moves away from the winding axis (36) during the filling of the groove (52).

5. Method according to Claim 4, **characterised in that** the pressure applied by the free end (62) of the flexible element to the thread(s) is substantially constant.

6. Set of tools for implementing a method for producing a fibre preform according to any one of the preceding claims, the set of tools comprising thread supply means (48), a mould (54) having a groove (52), in which at least one thread (34) can be wound about a winding axis (36), the set of tools being **characterised in that** it comprises at least one flexible element (58) which is capable of becoming deformed by means of flexion in a plane which contains the winding axis (36) in order to penetrate into the groove (52), the flexible element (58) comprising a free end (62) which is capable of moving into contact with the thread(s) in order to push them towards the base of the groove (52) and/or towards zones (55) which are not directly accessible to the thread(s).

7. Set of tools according to Claim 6, **characterised in that** the flexible element (58) is a thin disc (68) having an axis (70) which is arranged in a plane which contains the winding axis (36).

8. Set of tools according to Claim 7, **characterised in that** the axis (70) of the thin disc pivots freely so that the periphery of the thin disc (68) rolls with or without friction on the thread(s) which is/are already wound.

9. Set of tools according to either of Claims 7 to 8, **characterised in that** the thin disc (68) is of polyvinyl chloride.

10. Set of tools according to any one of Claims 7 to 9, **characterised in that** the thin disc (68) has a thickness between approximately 0.2 mm and 0.3mm.

11. Set of tools according to any one of Claims 6 to 10, **characterised in that** the flexible element (58) is fixedly joined to a movable support (60).

12. Set of tools according to the preceding claim, **characterised in that** it comprises a sliding member (64) which extends radially and along which the support (60) can slide.

13. Set of tools according to the preceding claim, **characterised in that** it comprises return means (66) which tend to keep the free end (62) of the flexible element in contact with the thread(s).
